(19)

Europäisches Patentamt
European Patent Office
Office européen des brevets

(11)  **EP 3 187 841 B1**

(12)  **EUROPEAN PATENT SPECIFICATION**

(45) Date of publication and mention of the grant of the patent:
**03.07.2019  Bulletin 2019/27**

(21) Application number: **15837059.3**

(22) Date of filing: **19.08.2015**

(51) Int Cl.:
*G01H 9/00* (2006.01)　　　*G01M 7/02* (2006.01)

(86) International application number:
**PCT/CN2015/087494**

(87) International publication number:
**WO 2016/029814 (03.03.2016 Gazette 2016/09)**

(54) **FIBRE BRAGG GRATING VIBRATION SENSOR AND VIBRATION MEASUREMENT ELEMENT THEREOF**

FASER-BRAGG-GITTER-SCHWINGUNGSSENSOR UND SCHWINGUNGSMESSUNGSELEMENT DAFÜR

CAPTEUR DE VIBRATION DE RÉSEAU DE BRAGG SUR FIBRE ET ÉLÉMENT DE MESURE DE VIBRATION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2014  CN 201410419902**

(43) Date of publication of application:
**05.07.2017  Bulletin 2017/27**

(73) Proprietor: **Nuctech Company Limited
TongFang Building,
Shuangqinglu,
Haidian District
Beijing 100084 (CN)**

(72) Inventors:
• **MAO, Xianhui
Beijing 100084 (CN)**

• **JIANG, Ting
Beijing 100084 (CN)**
• **ZHAI, Jianglan
Beijing 100084 (CN)**
• **CONG, Yushu
Beijing 100084 (CN)**

(74) Representative: **Boult Wade Tennant LLP
5th Floor, Salisbury Square House
8, Salisbury Square
London EC4Y 8AP (GB)**

(56) References cited:
| | |
|---|---|
| **CN-A- 101 210 937** | **CN-A- 101 210 937** |
| **CN-A- 102 080 986** | **CN-A- 103 344 317** |
| **CN-A- 103 344 317** | **CN-A- 103 465 934** |
| **CN-A- 103 465 934** | **CN-U- 204 165 644** |
| **CN-Y- 2 812 009** | **JP-A- 2009 229 070** |
| **JP-A- 2010 078 489** | **JP-A- 2012 202 686** |

**Description**

TECHNICAL FIELD

The present application relates to a vibration sensor, and in particular to a fiber Bragg grating (FBG) vibration sensor and a vibration measurement element thereof.

BACKGROUND

Vibration measurement refers to a process of measuring parameters that can characterize a vibration characteristic of an object. Vibration measurement is important in fault monitoring and structural health monitoring. For vibration measurement, vibration sensors that can meet measurement requirements in sensitivity and frequency response should be selected. Currently available vibration sensors include, among others, piezoelectric sensor, magneto-electric sensor, and optical fiber vibration sensor.

Optical fiber sensing is a novel sensing technique with the development of optical fiber and optical fiber communication. Since 1978 when a fiber Bragg grating was first formed in a fiber, fiber Bragg grating has been widely used in optical fiber communication and sensing. After its first use in strain and temperature sensing experiments, fiber Bragg grating has been developed continuously and rapidly, and has been the fastest developing and most attractive technique in the field of optical fiber sensing. This is because a sensor formed by fiber Bragg grating has a number of remarkable advantages over other optical fiber sensors, which may include: the sensing element is small-sized, light, can be put in a very small space and even embedded into a composite material; with wavelength division multiplexing (WDM), time division multiplexing (TDM) and space division multiplexing (SDM) techniques, a plurality of fiber Bragg gratings may be provided in each of optical fiber channels to form quasi-distributive sensing points, which facilitates spatial construction of network and allows a high resolution; a fiber Bragg grating as a sensing element outputs an absolute wavelength (which has an intrinsic wavelength scale) and can serve as an absolute measuring method; a multi-parameter intelligent sensing element can be prepared taking advantage of the special spectral characteristics of a fiber Bragg grating with composite substructures. Therefore, fiber Bragg grating is particularly suitable for health monitoring and automatic control for municipal works, pipeline facilities, spacecrafts, airplanes, ships, industrial and manufacturing equipments, etc.

Fiber Bragg grating sensing is resistant to electromagnetic interference and corrosion, highly sensitive, reliable, easy for network construction and allows for distributive measurement, and is particularly suitable for some special applications ranging from electricity, petroleum, petrochemical, transportation and construction. It is also applied to the field of monitoring for public security, national defense, industrial and agricultural production, and environmental protection.

JP-A-2010 078489 discloses a fiber Bragg grating sensor having those features defined in the pre-characterizing portion of claim 1.

SUMMARY

Embodiments of the application are directed to provide a fiber Bragg grating sensor having one or more of: high sensitivity, wide frequency range, selective measurement of vibrations in three axial directions or any of them.

According to the present invention there is provided a fiber Bragg grating vibration sensor as defined in claim 1.

According to embodiments of the application, vibration measurement elements mutually perpendicular can be mounted to a single base, and vibrations in three directions can be selectively measured simultaneously, allowing a comprehensive measurement of spatial vibrations. In addition, it is possible to optionally set the three axes to have different sensitivities on vibration to adapt to measurement requirements for different situations.

BRIEF DESCRIPTION OF THE DRAWINGS

   Fig. 1 is a structural diagram of a fiber Bragg grating vibration sensor according to an example embodiment of the application.
   Fig. 2 is a structural diagram of a vibration measurement element in a fiber Bragg grating vibration sensor according to an example embodiment of the application.
   Fig. 3 illustrates an example embodiment of the application applied in vibration measurement for railroad track.

In the drawings, 100 denotes vibration sensor, 110 denotes vibration sensor housing, 120 denotes base, 131, 132 and 133 denote mounting surfaces, 141, 142 and 143 denote vibration measurement elements; 151 and 152 denote wire posts, 161, 162 and 163 denote mounting holes, 171, 172 and 173 denote fiber Bragg gratings, 180 denotes leading-out hole, 190 denotes leading-out optical fiber, 200 denotes cantilever beam, 211 and 212 denote raised portions, 231 denotes cantilever beam mounting hole, 242 denotes thickness-center face of cantilever beam, 206 denotes fiber Bragg grating, 313 denotes railroad track, 314 denotes mounting screw, 315 denotes holding piece, and 316 denotes fiber Bragg grating vibration sensor.

DETAILED DESCRIPTION

In order to make the objectives, structures and advantages of the technical solutions of the application clearer, the invention will be described below in further detail in conjunction with the drawings.

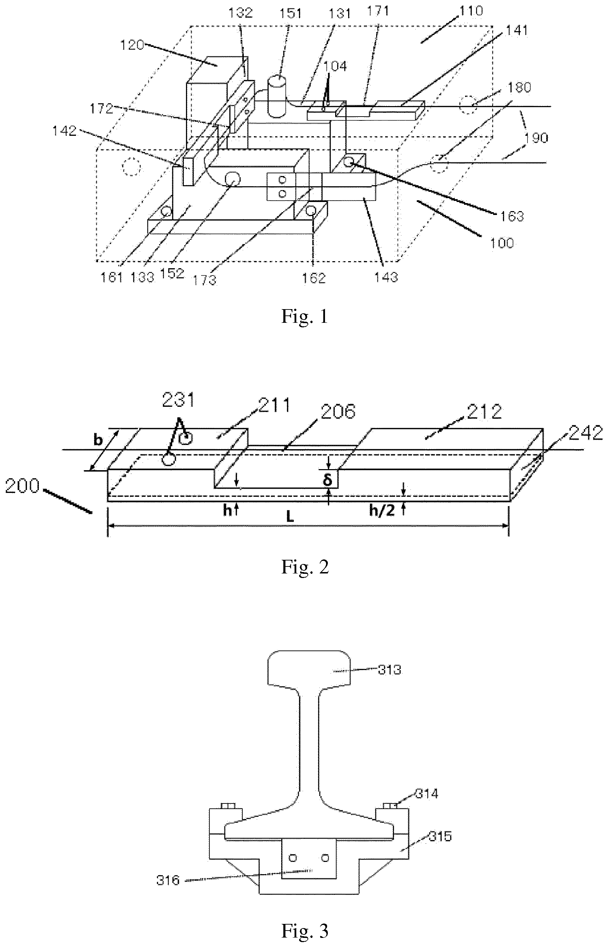

Fig. 1 is a structural diagram of a fiber Bragg grating vibration sensor 100 according to an example embodiment of the application. The fiber Bragg grating vibration sensor 100 may be fixed within a housing 110. The fiber Bragg grating vibration sensor 100 includes a base 120, vibration measurement elements 141, 142 and 143, and fiber Bragg gratings 171, 172 and 173.

In order to facilitate explanation, the following will be directed to an embodiment in which the fiber Bragg grating 100 includes three vibration measurement elements 141, 142 and 143 and three corresponding fiber Bragg gratings 171, 172 and 173. However, the fiber Bragg grating 100 is not necessary to include the three vibration measurement elements 141, 142 and 143 and the three fiber Bragg gratings 171, 172 and 173 simultaneously. In an example, the fiber Bragg grating vibration sensor 100 may be configured to include the vibration measurement element and fiber Bragg grating for only one of X, Y and Z directions. In another example, the fiber Bragg grating vibration sensor 100 may be configured to include the vibration measurement elements and fiber Bragg gratings for any two of X, Y and Z directions. In a further embodiment, the fiber Bragg grating vibration sensor 100 may be configured to include the vibration measurement elements and fiber Bragg gratings for all X, Y and Z directions simultaneously. In this latter case the fiber Bragg grating vibration sensor 100 may be referred to as a tri-axial fiber Bragg grating vibration sensor 100; it can be used to measure the vibrations in X, Y and Z directions simultaneously, and may be used to measure the vibrations in any one or two directions.

The base 120 may be secured within the housing 110.

The base 120 may be manufactured to have three mounting surfaces 131, 132 and 133 that are perpendicular to each other. For example, the base 120 may be formed by three cuboids, and the three cuboids may for example be aligned at their leftmost ends. The first and third cuboids are placed horizontally in parallel and aligned, with a distance in between which fits the second cuboid placed in its width direction. The second cuboid is placed vertically. The three mounting surfaces 131, 132 and 133 that are perpendicular to each other may be selected as a top surface of the first cuboid, a bottom surface of the second cuboid and a left side surface of the third cuboid.

The base 120 may be fixed to a bottom of the housing 110, for example through mounting holes 161, 162, etc., with a mounting bolt, screw or in other ways.

The three vibration measurement elements may each include a body as a cantilever beam and be mounted to the base 120. For example, the three vibration measurement elements 141, 142 and 143 may each have an end mounted to the three mounting surfaces 131, 131 and 133, perpendicular to each other, in X, Y or Z directions respectively. For example, a mounting hole may be provided at an end of the cantilever of each of the three vibration measurement elements 141, 142 and 143, which may be fixed to the three mounting surfaces 131, 132 and 133 with a mounting bolt or screw. The three vibration measurement elements 141, 142 and 143 may be mounted on the three mounting surfaces 131, 132 and 133 such that they are spatially perpendicular to each other. The three vibration measurement elements 141, 142 and 143 themselves may be parallel to X, Y and Z directions respectively. As described above, an end of the cantilever beam of each of the vibration measurement elements 141, 142 and 143 is mounted on the mounting surface 131, 132 or 133, and the other end of the cantilever beam is free and functions as a mass block.

Each of the three vibration measurement elements 141, 142 and 143 may measure the vibration in an axial direction. The vibration measurement elements 141, 142 and 143 measure the vibrations in X direction, Y direction and Z direction respectively. The X, Y and Z directions may be set as needed as long as they are spatially perpendicular to each other.

Fiber Bragg gratings 171, 172 and 173 are fastened to the vibration measurement elements 141, 142 and 143 respectively. The fiber Bragg gratings 171, 172 and 173 sense the vibration in X, Y and Z directions respectively.

Each of the vibration measurement elements 141, 142 and 143 may include two raised portions provided in the direction of its cantilever beam to adjust the sensitivity of the fiber Bragg grating vibration sensor 100. The two raised portions may have the same height. The height of the raised portions determines an amplification ratio for the sensitivity, and different heights may be used for different requirements on sensitivity. The vibration measurement elements may have different heights of raised portions as needed; for example, the two raised portions of the first vibration measurement element 141 may have a different height than that of the two raised portions of the second vibration measurement element 142. The fiber Bragg gratings 171, 172 and 173 may be fastened (e.g. adhered) to the raised portions on surfaces of the vibration measurement elements 141, 142 and 143 in X, Y and Z directions respectively. The structure of the raised portions on the surfaces of the vibration measurement elements 141, 142 and 143 will be described later with reference to Fig. 2.

The fiber Bragg gratings 171, 172 and 173 fastened to the vibration measurement elements 141, 142 and 143 may be connected in series. For example, the serially connected fiber Bragg gratings may be coupled to a fiber Bragg grating demodulator (not shown) via a leading-out optical fiber 190 which enters the housing 110 via a leading-out hole 180 of the housing 110, and fastened to the first, second and third vibration measurement elements 141, 142 and 143 respectively in this order. The fiber Bragg gratings may have a tail end led out via another leading-out hole 180 of the housing 110 and coupled to the fiber Bragg grating demodulator (not shown). The leading-out holes 180 for the fiber Bragg gratings may be provided on a side surface of the housing 110 that is away from the second vibration measurement element 142 and is perpendicular to the extension lines of the first and third vibration measurement elements 141 and 143.

In order to arrange the fiber Bragg gratings and for their stability, in an embodiment the fiber Bragg gratings may turn at a wire post 151 between the first vibration measurement element 141 and the second vibration measurement element 142 and/or a wire post 152 between the second vibration measurement element 142 and the third vibration measurement element 143. The wire posts 151 and 152 are optional: there may be one, both, or neither of them. The wire posts 151 and 152 may be fixed to, and perpendicular to, the first and third mounting surfaces 131 and 133 respectively. More wire posts may be fixed to the first and third mounting surfaces 131 and 133 if needed.

When a vibration occurs in X, Y and Z directions, the cantilever beam of each of the vibration measurement elements 141, 142 and 143 will experience a deflection change in the direction of vibration, as the other end of the cantilever beam functions as a mass block. The deflection change leads to a strain change in the fiber Bragg gratings 171, 172 and 173 respectively. The strain change is sensed by the fiber Bragg gratings 171, 172 and 173 and sent to the fiber Bragg grating demodulator (not shown) via the leading-out optical fiber 190. The fiber Bragg grating demodulator (not shown) calculates to determine a wavelength change in each of the fiber Bragg gratings 171, 172 and 173 whereby the amount of vibration in each of X, Y and Z directions is calculated.

Fig. 2 is a structural diagram of a vibration measurement element in a fiber Bragg grating vibration sensor according to an example embodiment of the application. The vibration measurement element may be used as any of the vibration measurement elements 141, 142 and 143 shown in Fig. 1.

The vibration measurement element may include a cantilever beam 200, and a first raised portion 211 and a second raised portion 212 provided in substantially an axial direction of the cantilever beam 200. A fiber Bragg grating 206 may be fastened (e.g. adhered) to surfaces of the first raised portion 211 and the second raised portion 212 of the cantilever beam 200 in substantially the axial direction of the cantilever beam 200. In an embodiment, the fiber Bragg grating 206 is provided to divide each of the first raised portion 211 and the second raised portion 212 equally in the width direction.

The cantilever beam 200 may be fixed to a corresponding mounting surface (not shown) via two cantilever beam mounting holes 231 in the first raised portion 211. For example, bolts or screws are provided in the mounting holes 231 to fix an end of the first raised portion 211 of the cantilever 200 to the mounting surface. The cantilever beam 200 may be fixed to the corresponding mounting surface (not shown) via cantilever beam mounting holes in other number or other form, or via other fixing structure than mounting holes.

As shown in Fig. 2, the cantilever beam 200 has a length $L$, thickness $h$ and a width $b$, the first raised portion 211 and the second raised portion 212 have a same height $\delta$, which is as large as $N$ times of the thickness $h$ of the cantilever beam 200, i.e. $\delta = Nh$, where $N$ is a value larger than zero), and the cantilever beam 200 has an equivalent mass block at its end with a mass of $m$. Theoretically as the value of $N$ increases, the sensitivity of the fiber Bragg grating vibration sensor increases. Taking into consideration the limitation in sensor size, the value of $N$ may typically range from 1 to 3. As described below, according to the example embodiment of the application, the height of the first and second raised portion 211 and 213 leads to an increased distance from the fiber Bragg grating 206 to a thickness-center face of cantilever beam 242, resulting in a substantially increased sensitivity of the fiber Bragg grating vibration sensor. The thickness-center face of cantilever beam 242 herein refers to a virtual face at a center position in the thickness direction of the cantilever beam 200 and is bent with the cantilever beam 200 being bent in the thickness direction.

The cantilever beam 200 shown in Fig. 2 has an end at the side of the second raised portion 212, which is free instead of being fixed to a mounting surface and functions as a mass block. The cantilever beam 200 will be bent under an inertial force, with a curvature radius of $\rho$. The bending of the cantilever beam 200 will introduce a strain $\varepsilon_x$ on the fiber Bragg grating 206. The following equations will establish according to mechanics of materials:

$$\varepsilon_x = \frac{\frac{h}{2} + \delta}{\rho} \qquad (1)$$

$$\frac{1}{\rho} = \frac{M}{EJ} \qquad (2)$$

$$M = FL \qquad (3)$$

$$J = \frac{bh^3}{12} \qquad (4)$$

$$F = ma \qquad (5)$$

Where:

$h$ is the thickness of the cantilever beam in the unit of m;
$\delta$ is the height of the raised portions in the unit of m;
$\rho$ is the curvature radius of the cantilever beam in the unit of m;
$M$ is the moment of the inertial force in the unit of Nm;
$E$ is the Young's modulus of the material for the cantilever beam in the unit of GPa;
$J$ is the inertia moment of the cantilever beam in the unit of $m^4$;
$L$ is the length of the cantilever beam in the unit of m;
$F$ is the inertial force to which the cantilever beam is subject, in the unit of N;
$b$ is the width of the cantilever beam in the unit of m;
$m$ is the equivalent mass at the end of the cantilever beam in the unit of g;
$a$ is the acceleration of the external vibration in the unit of $m/s^2$; and
$N$ is the ratio of the height of the raised portions to the thickness of the cantilever beam.

The moment $M$ of the inertial force can be calculated with equation (3) as a product of the inertial force $F$ and the length $L$ of the cantilever beam.
The Young's modulus $E$ of the material for the cantilever beam is determined by the material, and can be obtained from a look-up table when the material for the cantilever beam is selected.
The inertia moment $J$ of the cantilever beam can be calculated with equation (4) when the width $b$ and thickness $h$ of the cantilever beam are determined.
The inertial force $F$ for the cantilever beam is calculated with equation (5) as a product of the equivalent mass and the acceleration, in which the acceleration is the quantity to be measured.
After the structure and material for the cantilever beam are determined, the equivalent mass $m$ for the cantilever beam is also determined. $m$ is merely an intermediate variable in the equations and it is not necessary to calculate the value explicitly.
The acceleration $a$ of the external vibration is the quantity that the sensor is to measure.
From equations (1) to (5), the strain on the fiber Bragg grating 206 resulted from the bending of the cantilever beam 200 is expressed as:

$$\varepsilon_x = \frac{\frac{h}{2} + \delta}{\rho} = \frac{12maL\left(\frac{h}{2} + Nh\right)}{Ebh^3} = \frac{6maL(1 + 2N)}{Ebh^2} \qquad (6)$$

If a cantilever beam 200, which has the same parameters as above but is not provided with the raised portions 211 and 212, has the fiber Bragg grating 206 fastened to the surface of the cantilever beam 200, then the value of $N$ is zero, and the strain on the fiber Bragg grating 206 resulted from the bending of the cantilever beam 200 will be expressed as:

$$\varepsilon' = \frac{6maL}{Ebh^2} \qquad (7)$$

It is apparent when comparing equation (6) against equation (7) that the strain on the fiber Bragg grating is increased by a factor of (1+2*N*) when the raised portions are introduced. Therefore, with the other sizes determined, an increased value of *N* allows the strain $\varepsilon$ resulted from the acceleration *a* to increase, leading to an increased sensitivity for the fiber Bragg grating vibration sensor. In the fiber Bragg grating vibration sensor, the heights of the raised portions of the vibration measurement elements in X, Y and Z directions may be separately selected so that the sensitivities in the three directions can be improved respectively. During manufacturing, the raised portions may be machined to have different heights based on different requirements on sensitivity, and it is possible to keep the same height for the first and second raised portions. Therefore a series of raised portions having different heights may be provided to provide fiber Bragg grating vibration sensors having a series of sensitivities.

The sensitivities required for X, Y and Z directions may be same or different in practice. Therefore the vibration measurement elements for X, Y and Z directions may have raised portions the heights of which may be independently selected to be same or different to adapt to the requirements on sensitivity of vibration measurement in different directions.

Though in the example embodiment of the application, the tri-axial fiber Bragg grating vibration sensor may measure the quantity of vibration in three directions of vibration, the tri-axial fiber Bragg grating vibration sensor may also be used to measure only the quantity of vibration in any of directions.

Fig. 3 illustrates a tri-axial fiber Bragg grating vibration sensor 316 applied in vibration measurement for railroad track according to an example embodiment of the application.

The drawing shows a side view of a railroad track on which the tri-axial fiber Bragg grating vibration sensor 316 is mounted. The track 313 is generally fixed to railway sleepers by mounting screws 314 at both sides. The tri-axial fiber Bragg grating vibration sensor 316 may, for example, be mounted beneath the track 313 with a holding piece 315. Falling rocks along the railway may impact on the railway sleeper system and causes a vibration of the track, and the tri-axial fiber Bragg grating vibration sensor 316 may measure this vibration. Different angles and positions at which the rocks impact on the railway sleeper system will lead to different vibrations in three axial directions, and hence the combination of the vibrations in the three axial directions can be applied in determining the situation of falling rocks. If it is determined that the vibration is due to a falling rock, then a warning may be given in time. The tri-axial fiber Bragg grating vibration sensor 316 may measure simultaneously the vibration of the track in all the three axial directions.

The tri-axial fiber Bragg grating vibration sensor 316 according to the example embodiments of the application may also be used in other applications of e.g. electricity, petroleum, petrochemical, transportation and construction.

Example embodiments of the application have been described above in conjunction with the drawings. However the scope of the invention is not limited thereto, and a person skilled in the art may conceive of various modifications and alternatives without departing from the scope of the invention, which is defined solely by the claims.

**Claims**

1. A fiber Bragg grating vibration sensor (100; 316), comprising:

   a base (120);
   a plurality of vibration measurement elements (141, 142, 143); and
   a plurality of fiber Bragg gratings (171, 172, 173; 206),
   wherein each of the vibration measurement elements (141, 142, 143) comprises a cantilever beam (200) and first and second raised portions (211, 212) provided in an axial direction of the cantilever beam (200);
   wherein for each of the vibration measurement elements (141, 142, 143), an end at a side of the first raised portion (211) is fixedly mounted on the base (120), and an end at the other side of the second raised portion (212) is free; and
   wherein each of the fiber Bragg grating (171, 172, 173; 206) is fastened to the respective vibration measurement element (141, 142, 143) in the axial direction to sense a vibration of the respective vibration measurement element (141, 142, 143),
   **characterized in that** the plurality of the vibration measurement elements (141, 142, 143) are mounted to be spatially perpendicular to each other for simultaneous tri-axial measurement, and wherein a height ($\delta$) of the raised portions (211, 212) of a first one among the plurality of vibration measurement elements (141, 142, 143) is different from a height ($\delta$) of the raised portions (211, 212) of a second one among the plurality of vibration measurement elements (141, 142, 143).

2. The fiber Bragg grating vibration sensor of claim 1, wherein the first and second raised portions (211, 212) have a same height ($\delta$).

3. The fiber Bragg grating vibration sensor of claim 2, wherein the height ($\delta$) of the first and second raised portions (211, 212) is N times of a thickness (h) of the cantilever beam (200), where N ranges between 1 and 3.

4. The fiber Bragg grating vibration sensor of claim 1, wherein the plurality of vibration measurement elements (141, 142, 143) fasten fiber Bragg gratings (171, 172, 173; 206) connected in series.

5. The fiber Bragg grating vibration sensor of claim 1, wherein the number of the vibration measurement elements (141, 142, 143) is three.

6. The fiber Bragg grating vibration sensor of claim 1, further comprising a leading-out optical fiber (190) for coupling the fiber Bragg grating (171, 172, 173; 206) to a fiber Bragg grating demodulator, wherein the fiber Bragg grating demodulator is to calculate an amount of the vibration.

7. The fiber Bragg grating vibration sensor of claim 1, further comprising a wire post (151, 152) fixed to the base (120) between the plurality of vibration measurement elements (141, 142, 143).

**Patentansprüche**

1. Faser-Bragg-Gitterschwingungssensor (100; 316), umfassend:

eine Basis (120);
eine Vielzahl von Schwingungsmesselementen (141, 142, 143); und
eine Vielzahl von Faser-Bragg-Gittern (171, 172, 173; 206),
wobei jedes der Schwingungsmesselemente (141, 142, 143) einen Auslegerbalken (200) sowie eine erste und eine zweite, in einer axialen Richtung des Auslegerbalkens (200) vorgesehene Vorsprung (211, 212) aufweist;
wobei für jedes der Schwingungsmesselemente (141, 142, 143), ein Ende an einer Seite der ersten Vorsprung (211) fest an der Basis (120) angebracht ist und ein Ende an der anderen Seite der zweiten Vorsprung (212) frei ist; und
wobei jedes der Faser-Bragg-Gitter (171, 172, 173; 206) auf dem jeweiligen Schwingungsmesselement (141, 142, 143) in axialer Richtung fixiert ist, damit eine Schwingung des jeweiligen Schwingungsmesselements (141, 142, 143) erfassbar ist,
**dadurch gekennzeichnet, dass** die Vielzahl der Schwingungsmesselemente (141, 142, 143) so angeordnet sind, dass sie für eine gleichzeitige dreiachsige Messung räumlich senkrecht zueinander sind, und wobei sich eine Höhe ($\delta$) der Vorsprungen (211, 212) des ersten unter den mehreren Schwingungsmesselementen (141, 142, 143) von einer Höhe ($\delta$) der Vorsprungen (211, 212) des zweiten unter den mehreren Schwingungsmesselementen (141, 142, 143) unterscheidet.

2. Faser-Bragg-Gitterschwingungssensor nach Anspruch 1, wobei die erste Vorsprung und die zweite Vorsprung (211, 212) eine gleiche Höhe ($\delta$) haben.

3. Faser-Bragg-Gitterschwingungssensor nach Anspruch 2, wobei die Höhe ($\delta$) der ersten und der zweiten Vorsprungen (211, 212) das N-fache einer Dicke (h) des Auslegerbalkens (200) beträgt, wobei N im Bereich zwischen 1 und 3 liegt.

4. Faser-Bragg-Gitter-Gitterschwingungssensor nach Anspruch 1, wobei die Vielzahl von Schwingungsmesselementen (141, 142, 143) auf den Faser-Bragg-Gittern (171, 172, 173; 206) fixiert ist, damit die Faser-Bragg-Gitter in Reihe geschaltet sind.

5. Faser-Bragg-Gitterschwingungssensor nach Anspruch 1, wobei die Anzahl der Schwingungsmesselementen (141, 142, 143) drei beträgt.

6. Faser-Bragg-Gitterschwingungssensor nach Anspruch 1, ferner umfassend: eine optische Durchführungsfaser (190) zum Koppeln des Faser-Bragg-Gitters (171, 172, 173; 206) mit einem Faser-Bragg-Gitter-Demodulator, wobei das Faser-Bragg-Gitter-Demodulator zur Berechnung von der Intensität der Schwingung dient.

7. Faser-Bragg-Gitterschwingungssensor nach Anspruch 1, ferner umfassend: einen Drahtstift (151, 152), der an der Basis (120) zwischen den mehreren Schwingungsmesselementen (141, 142, 143) befestigt ist.

**Revendications**

1. Capteur de vibrations de réseau de Bragg sur fibre (100 ; 316), comprenant :

   une base (120) ;
   une pluralité d'éléments de mesure de vibrations (141, 142, 143) ; et
   une pluralité de réseaux de Bragg sur fibre (171, 172, 173 ; 206),
   dans lequel chacun des éléments de mesure de vibrations (141, 142, 143) comprend une tige en porte-à-faux (200) et des première et deuxième parties surélevées (211, 212) prévues dans une direction axiale de la tige en porte-à-faux (200) ;
   dans lequel, pour chacun des éléments de mesure de vibrations (141, 142, 143), une extrémité au niveau d'un côté de la première partie surélevée (211) est montée de manière fixe sur la base (120), et une extrémité au niveau de l'autre côté de la deuxième partie surélevée (212) est libre ; et
   dans lequel chacun des réseaux de Bragg sur fibre (171, 172, 173 ; 206) est attaché à l'élément de mesure de vibrations respectif (141, 142, 143) dans la direction axiale pour détecter une vibration de l'élément de mesure de vibrations respectif (141, 142, 143),
   **caractérisé en ce que** la pluralité des éléments de mesure de vibrations (141, 142, 143) sont montés de manière à être perpendiculaires dans l'espace les uns par rapport aux autres pour des mesures triaxiales simultanées, et où une hauteur ($\delta$) des parties surélevées (211, 212) d'un premier élément parmi la pluralité d'éléments de mesure de vibrations (141, 142, 143) est différente d'une hauteur ($\delta$) des parties surélevées (211, 212) d'un deuxième élément parmi la pluralité d'éléments de mesure de vibrations (141, 142, 143).

2. Capteur de vibrations de réseau de Bragg sur fibre de la revendication 1, dans lequel les première et deuxième parties surélevées (211, 212) ont une même hauteur ($\delta$).

3. Capteur de vibrations de réseau de Bragg sur fibre de la revendication 2, dans lequel la hauteur ($\delta$) des première et deuxième parties surélevées (211, 212) est égale à N fois une épaisseur (h) de la tige en porte-à-faux (200), où N varie entre 1 et 3.

4. Capteur de vibrations de réseau de Bragg sur fibre de la revendication 1, dans lequel la pluralité d'éléments de mesure de vibrations (141, 142, 143) attache des réseaux de Bragg sur fibre (171, 172, 173 ; 206) reliés en série.

5. Capteur de vibrations de réseau de Bragg sur fibre de la revendication 1, dans lequel le nombre d'éléments de mesure de vibrations (141, 142, 143) est égal à trois.

6. Capteur de vibrations de réseau de Bragg sur fibre de la revendication 1, comprenant en outre une fibre optique de sortie (190) pour coupler le réseau de Bragg sur fibre (171, 172, 173 ; 206) à un démodulateur de réseau de Bragg sur fibre, dans lequel le démodulateur de réseau de Bragg sur fibre est destiné à calculer une quantité de vibrations.

7. Capteur de vibrations de réseau de Bragg sur fibre de la revendication 1, comprenant en outre un montant de fil (151, 152) fixé à la base (120) entre la pluralité d'éléments de mesure de vibrations (141, 142, 143).

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010078489 A